# EUROPEAN PATENT APPLICATION

(11) **EP 3 133 023 A1**
(43) Date of publication of application: **22.02.2017**
(21) Application number: 16177502.8
(22) Date of filing: 01.07.2016
(51) Int. Cl.: B65D 5/76, B65D 25/52, B65D 5/06, G01F 11/26

(54) **A CONTAINER, A DEVICE FOR DELIVERING A MATERIAL CAPABLE OF FLOWING**

(30) Priority: 03.07.2015 NL 2015084
(71) Applicant: Tom Coronel Holding B.V., 3755 MX Eemnes (NL)
(72) Inventor: CORONEL, Tom Romeo, 3755 MX Eemnes (NL); BRAAM, Henderikus Gerardus, 2223 XK Katwijk (NL)
(74) Representative: Altenburg, Bernardus Stephanus Franciscus

(57) **Abstract**

A container has a pour opening. In order to be able to portion-wise deliver a dry bulk material or a liquid from the container the container has a divider wall between a first chamber and a second chamber which are connected via a transition chamber. Thus material can pass the pour opening of the container via the first chamber, the transition chamber and the second chamber. Furthermore, a device for such a container is claimed.

## Description

The present invention relates to a container, which container comprises a pour opening.

In the art cartons are known that have a pour opening. These are used for packaging of material that is capable of flowing, such as dry bulk material, for instance sugar or chocolate sprinkles. The packages have a pour opening, and besides the type with the pour opening that can be closed with the well-known retractable tab, the type having a stub for a screw cap is gaining popularity.

A problem is that dosing a bulk material from a container having a pour opening can be cumbersome.

The object of the present invention is to reduce this problem.

To this end, a container according to the preamble is
characterized in that the container comprises a body, which body provides a divider wall between a first chamber and a second chamber which are linked by a transition chamber,
wherein the divider wall comprises a first side and a second side, and the transition chamber
- at the first side of the divider wall has an inlet for allowing a flowable material into the transition chamber from the first chamber, and
- at the second side has a passage opening for delivering the flowable material from the transition chamber to the second chamber, via which second chamber the flowable material can pass the pour opening of the container.

Thus a flow path is defined for the material capable of flowing such as a dry bulk material from the first chamber at the first side of the divider wall from where the dry bulk material enters the transition chamber, can reach the second chamber via the transition chamber and can exit it via the pour opening. For dispensing bulk material, first the transition chamber is filled partially, after which the device is tilted, delivering the bulk material from the transition chamber to the second chamber (also to be referred to as dispensing chamber). Upon tilting back, the transition chamber will be filled again, so the dosed (batch-wise) delivery can take place quickly.

According to a first possible embodiment, the flowable material is a dry bulk material. Surprisingly, it has been found that the container also works for the portion-wise delivery of a liquid as a flowable material.

The container is for instance a container that advantageously contains a dry bulk material. The dry bulk material is for instance a food product, such as milk powder, sugar, chocolate sprinkles, another sugar or chocolate containing product that can be strewn, and coffee. It may also be something other then a food product, such as washing powder.

The container is for instance a jerrycan, a laminated cardboard pack or a bottle that advantageously contains a liquid or a dry bulk material. The bottle will generally be made of plastic or glass. The dry bulk material is for instance as defined above. The liquid is for instance a liquid detergent, fabric softener, a medicin such as a syrup, or a liquid food product such as cooking oil etc.

According to a favourable embodiment, the container comprises a pour opening that can be closed off with a cap as the pour opening.

This is a commercially important embodiment of the invention, which is compatabile with existing pour openings that can be closed off. The cap will in practice be a screw cap. The container is for instance a pack, such as a cardboard pack, or advantageously a bottle.

According to a favourable embodiment, the body is part of a device for the batch-wise delivery of a flowable material, which device comprises a first end and a second end, and wherein
- the device at the first end comprises a front wall and at a distance of the second end has a dispensing opening for delivering the flowable material,
- the body defines at least the transition chamber and the second chamber by means of walls wherein the second chamber opens up at the dispensing opening, and
- the divider wall extends from the first end towards the second end.

This is a highly practical embodiment of the device according to the invention for the batch-wise delivery of for instance a dry bulk material from a pack or a liquid from a bottle. The device will generally be a plastic device.

According to a favourable embodiment, the container is a pack having a roof shaped top side including two angled roof sections, wherein one of the two roof sections comprises the pour opening that can be closed off with a cap as the pour opening.

The roof shaped top side helps to guide dry bulk material effectively to the first side of the divider wall, thus feeding the bulk material effectively to the transition chamber.

According to a favourable embodiment, the container is a cardboard pack having a topside and an bottom side, with the body for providing the portion-wise delivery of dry bulk material being located in the interior of the cardboard pack,
wherein
- a first section of the pack and the divider wall define the first chamber,
- a second section of the pack and the divider wall define the second chamber wherein the second chamber opens up into the pour opening, and
- a third section of the pack and the body define the transition chamber;
wherein the divider wall extends in a direction being a direction from the topside toward the bottom side, and
wherein the container is a cardboard pack comprising a front wall, which container
- in an unopened state has a front wall with a lip section that at least partially forms part of the front wall and is defined by a U-shaped perforation, and
- can be brought in an opened state of the pack by tearing the perforation wherein the lip section is pushed in the pack; and
- with the lip section pushed into the pack may be in a locked state where the distal end of the lip section is capable of protruding to beyond the divider wall which defines a state wherein the opening is released and the lip section is kept in a locked position; and
- can be in an at least partially closed state after having been in the locked state by pressing against the divider wall so as to unlatch the lip section allowing it to return by resilience to a state wherein the lip section at least partially closes off the pour opening of the container.

The body is preferably a body based on paper, which term includes cardboard, whereby the pack essentially consists of one type of material and thus can be recycled easily.

The resilience may be inherent to the material used to form the container, or a resilient element may be provided, for instance made of plastic. When the distal end of the resilient element protrudes to beyond the broken perforation wall said distal end may contact the interior of the front wall thus closing off the discharge opening very effectively. Locking the lip section can be realised by the presence of an opening in the divider wall, but will preferably be achieved in that the distal end of the lip section rests on the top edge of the divider wall.

The present invention also relates to a device for delivering a flowable material, wherein the device has a first end and a second end, and comprises a body that includes a divider wall and defines a transition chamber, wherein
- the divider wall has a first side and a second side, and the transition chamber at the first side of the divider wall has an inlet for allowing a flowable material into the transition chamber and at the second side provides a passage opening for delivering the flowable material from the transition chamber;
- the body has a first chamber having a lateral opening for receiving the flowable material, which first chamber is connected via the inlet opening with the transition chamber;
- the device at the first end comprises a front wall and at a distance from the second end has a dispensing opening for delivering the flowable material,;
- the body defines by means of walls at least the transition chamber and a second chamber wherein the second chamber opens up in the dispensing opening;
and
- the divider wall extends from the first end towards the second end.

Thus the device defines a flow path for the material capable of flowing such as a bulk material, from a location at the first side of the divider wall, for instance near the front wall of the device, via the transition chamber to the second chamber and through which the bulk material can exit this second chamber via the dispensing opening. For dispensing bulk material, first the transition chamber is filled partially, after which the device is tilted resulting in delivery of the bulk material from the transition chamber to the second chamber. Upon tilting back the transition chamber is filled again, as a result of which the batch-wise delivery can take place quickly.

The device may for instance be clamped into the pour opening of a bottle or a cardboard pack provided with a plastic stub as a discharge opening, or screwed to it.

The device is for instance a device for delivering a dry bulk material.

The flowable material is for instance a dry bulk material. Surprisingly, the flowable material may also be a liquid.

The first chamber helps in effectively collecting bulk material or liquid and in guiding the collected bulk material or liquid to the transition chamber.

The device is preferably made of plastic.

According to a favourable embodiment, the front wall of the device is provided with the dispensing opening for delivering the flowable material.

Thus an effective device is provided that does not, or does not substantially, have to protrude from the pour opening, whereby it is possible that it can still be closed off with the cap (i.e. the original cap of the container).

According to a favourable embodiment, the body at the first end between the front wall and the back wall is formed circularly over at least 180° and the remainder of the circumference fits within a circumference defined by that circular form.

Such a device can easily be fitted in a plastic opening having a round cross section, wherein the circular circumference will be chosen as essentially equally large as the particular pour opening so as to prevent bulk material or liquid from exiting the container past the body.

According to a favourable embodiment, the body is within the circular circumference from the front wall toward the backside.

Thus the device can be fitted onto the container from the outside afterwards.

According to a favourable embodiment,
- the device comprises a first device section and a second device section,
- the first device section comprises the front wall and the divider wall,
- the second device section comprises the transition chamber, and
- one of the first device section and the second device section has the form of a cap for the other device section.

The device sections can be manufactured inexpensively and effectively by means of injection molding. They will advantageously be interconnected by means of a click connection or clamping. It is also possible to glue them to each other or connect them by means of ultra-sonic welding.

According to a favourable embodiment, at the first end the body is provided with an abutment for contacting the container.

Thus the device, in case it is fitted afterwards, can not be pushed into the container. The abutment is for instance in the shape of a cam, preferably a plurality of cams. The abutment can advantageously also be in the form of a flange. Therewith an effective sealing of a container with a stub can be achieved, in that the bulk material or the liquid cannot exit the container other than via the dispensing opening. It has been found that with a thin abutment the screw cap of a container known in the art can still be used to close it off. The flange will have a thickness of less than 3 mm, preferably less than 2 mm and more preferably less than 1 mm.

A possible embodiment is characterized in that the body is provided with a collar which extends over at least part of the circumference of the body and defines a gap for receiving an upright edge of a plastic pour opening that can be closed off with a cap.

The collar can act as an abutment by contacting the packaging. Preferably, however, the collar will clamp or screw the device to the container as a result of which the device cannot easily - for instance during dosing - get loose from the container.

Finally, the present invention relates to a computer-readable medium, wherein the computer-readable medium is a computer-readable medium with executable instructions for a computer for manufacturing the device according to any of the claims 6 to 12 using a 3D-printer.

3D printing also offers the possibility of manufacturing embodiments that cannot be manufactured by means of injection molding.

The present invention will now be illustrated with reference to the drawing where
Fig. 1A shows a perspective front view of a device for delivering dry bulk material or liquid;
Fig. 1B shows a cross-section of the device of Fig. 1A, looking in the direction away from the front side of the device;
Fig. 1C shows a front view of the device of Fig. 1A;
Fig. 1D shows a cross section of a bottle fitted with the device according to Fig. 1A;
Fig. 2A shows an exploded side view of the device 100;
Fig. 2B shows a view of a device section of the device shown in Fig. 2A;
Fig. 2C schematically shows a longitudinal sectional view of the device of Fig. 1A;
Fig. 3A shows a perspective view on the interior of the upper part of a cardboard pack, and Fig. 3B corresponds with Fig. 3A but now fitted with a device according to the invention;
Fig. 4 shows a side view of a cardboard pack;
Fig. 5 shows a horizontal cross section of the cardboard pack of Fig. 4;
Fig. 6 shows a blank for the body of the pack of Fig. 4;
Fig. 7 shows a perspective view of a body that, when fitted in a cardboard packaging, provides a pack according to the invention;
Fig. 8A to Fig. 8C show part of a front side of an alternative embodiment of a pack, a cross section of the pack in a closed state and a cross section of the pack in a usage state respectively;
Fig. 9A shows a blank for the body of the pack of Fig. 8A;
Fig. 9B shows a cross section of the blank of Fig. 9A in a glued, folded state; and
Fig. 9C shows a cross section of the glued blank of Fig. 9B in a folded out state.

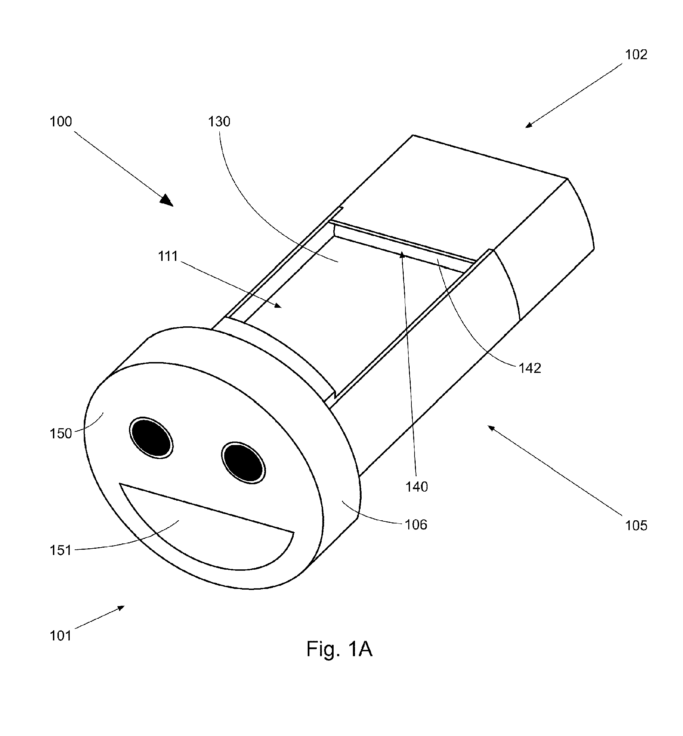

Fig. 1A shows a perspective front view of a device 100 for delivering a dry bulk material such as chocolate sprinkles. This device 100 is suitable for fitting on a pack of cardboard having a pour opening. The pour opening is well known in the art, and is usually made of plastic with a circular cross section and can be closed off with a plastic screw cap.

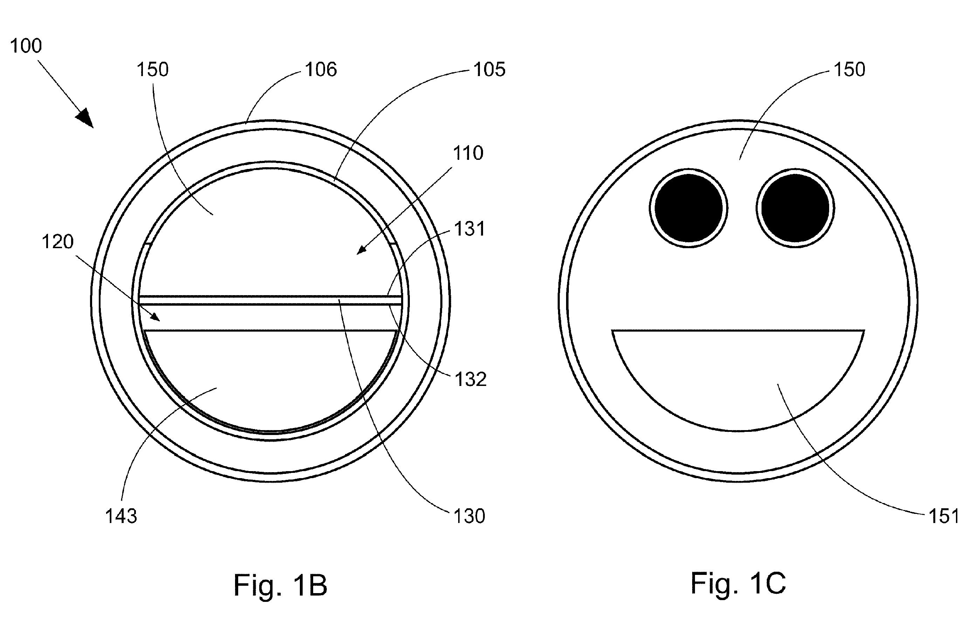

Fig. 1B shows a cross section of the device 100 of Fig. 1A, looking in the direction away from the front side of the device. Fig. 1C shows a front view of the device 100.

The device 100 has a first end 101 and a second end 102.

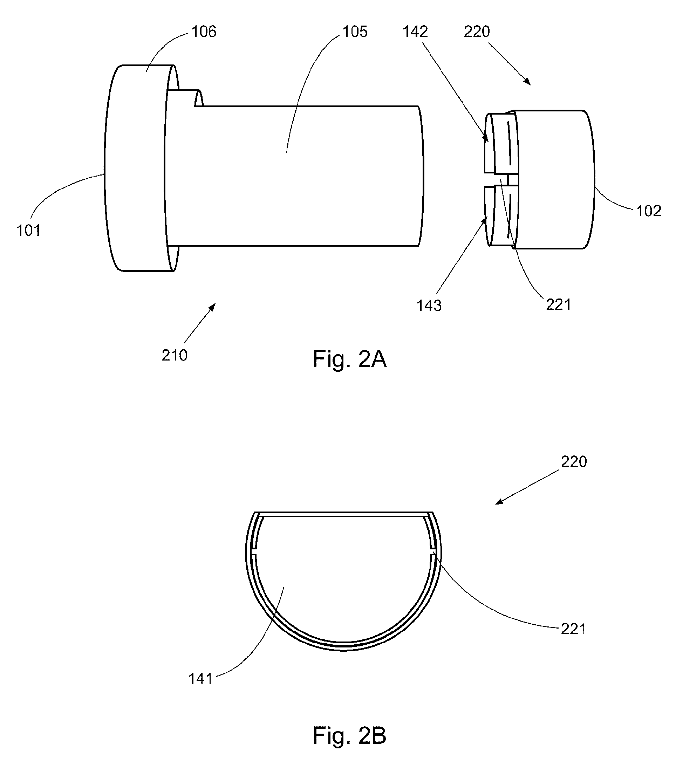

A body 105 is shown having a first chamber 110, a second chamber 120 separated by a divider wall 130, wherein the first chamber 110 and the second chamber 120 are connected via a transition chamber 140 having a back wall 141 (Fig. 2B). The first chamber 110 is situated at a first side 131 of the divider wall 130 and the second chamber is situated at a second side 132 of the divider wall 130. The first chamber 110 provides a lateral opening 111 for allowing dry bulk material to enter into the first chamber 110.

The transition chamber 140 comprises an inlet 142 at the first side 131 of the divider wall 130, which permits the dry bulk material to end up in the transition chamber 140 via the first chamber. The dry bulk material can exit the transition chamber via a passage opening 143 and then ends up in the second chamber 120. The dry bulk material can exit the second chamber 120 via a dispensing opening 151 in a front wall 150 of the device 100 at the first end thereof. By way of decoration the front wall 150 is provided with eyelets which, together with the dispensing opening 151, represent a face (Fig. 1C).

When the device 100 is held horizontally the dry bulk material will fall on the first side 131 of the divider wall 130. By tilting that dry bulk material will slide over the divider wall 130 into the transition chamber 140. By tilting back again the dry bulk material will exit the second chamber 120, and it will exit the device 100 via the dispensing opening 151.

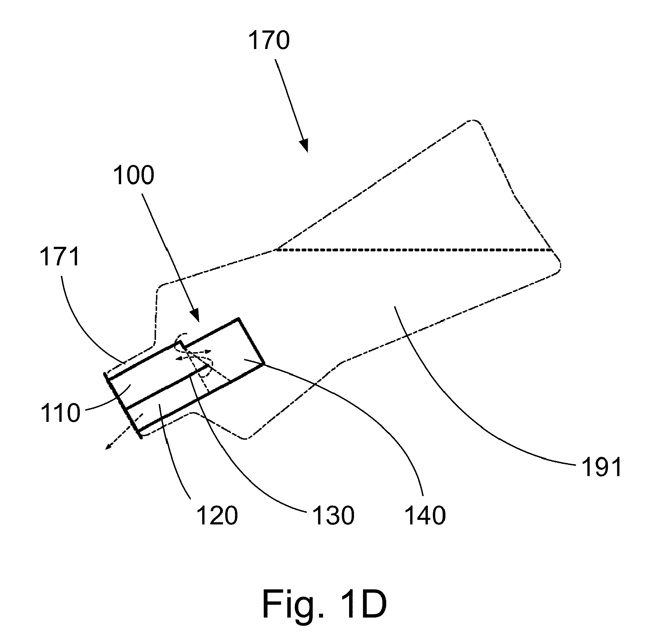

The embodiment illustrated in Fig. 1 includes a collar 106 which can cover a plastic section of a pour opening of the pack that is protruding from said pack. Therewith the collar 106 may clamp the plastic part or by contacting a wall of the pack prevent the device from ending up in the interior of the pack.

The plastic device described here is also suitable for dispensing liquid.

Fig. 1D shows a device 100 similar the one of Fig. 1A fitted in a neck 171 of a bottle 170 that contains a flowable material 191, here a liquid. The liquid may be dispensed portion-wise.

The device 100 of Fig. 1 is made of plastic and comprises two device sections (Fig. 2A) both of which can be manufactured by means of injection molding.

The first device section 210 comprises the front wall 150 and the divider wall 130. The second device section 220 comprises the transition chamber 140 with back wall 141 (Fig. 2B).

In the embodiment illustrated here the second device section 220 is in the form of a cap for the first device section 210, which is connected therewith by clicking. Recesses 221 can be seen for receiving the divider wall 130.

For a given first device section 210 the length of the a second device section 220 can be adapted to provide the desired dosage. In other words: The injection mold for the first device section 210 can be the same, thus saving cost.

Fig 2B shows a view of the second device section 220, in the longitudinal direction of the device 100.

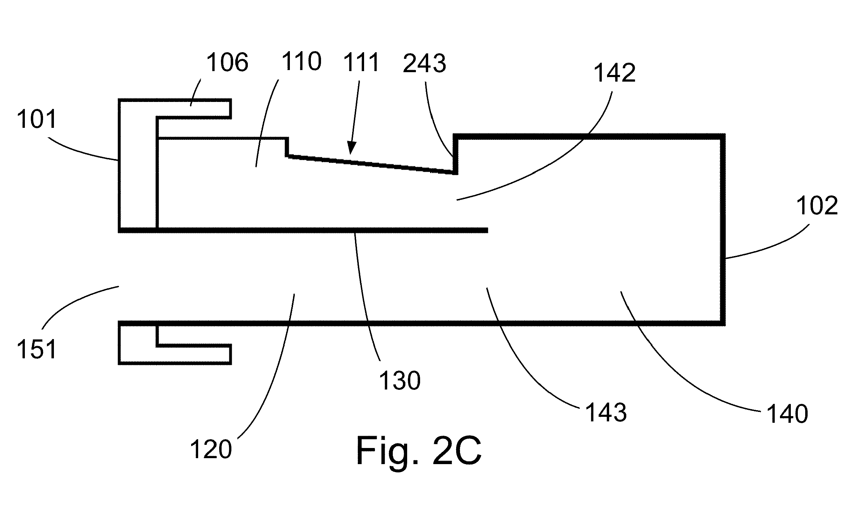

Fig. 2C shows a schematic longitudinal sectional view of the device 100 of Fig. 1A.

For a dry bulk material the volume of the first chamber 110 is advantageously larger than that of the transition chamber 140 and the latter, when the device is turned back upright, is completely filled up to the edge 243.

In case of a liquid the volume of the first chamber 110 is advantageously smaller than the volume of the transition chamber 140. Hereby it is avoided that liquid will flow over the divider wall 130 back into the first chamber 110.

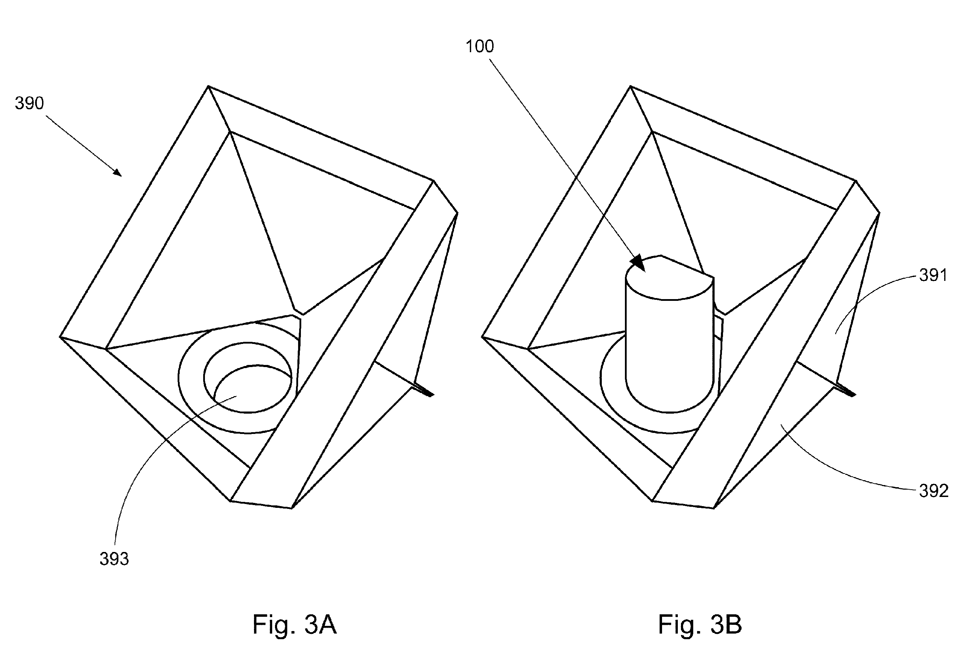

Fig. 3A shows a perspective view on the interior of the upper part of a cardboard pack 390. In Fig. 3B that part is provided with a device 100 according to the invention as discussed above.

Fig. 3A shows a roof shaped top side comprising two angled roof sections, that is a first roof section 391 provided with a pour opening 393 and a second roof section 392. The roof sections and folded in wall parts of the cardboard pack 390 provide internally a pyramidal shape, which will lead the dry bulk material automatically to the device 100. Now, the device 100 is fitted in the pour opening 393 in such a way (Fig. 3B) that the lateral opening 111 faces the point of the pyramidal shape. The little face at the first end 101 increases the likelihood that even without instructions the user will orient the device correctly for proper functioning thereof. When tilting the pack the dry bulk material will fall from the corner of the pyramidal shape into the first chamber 110.

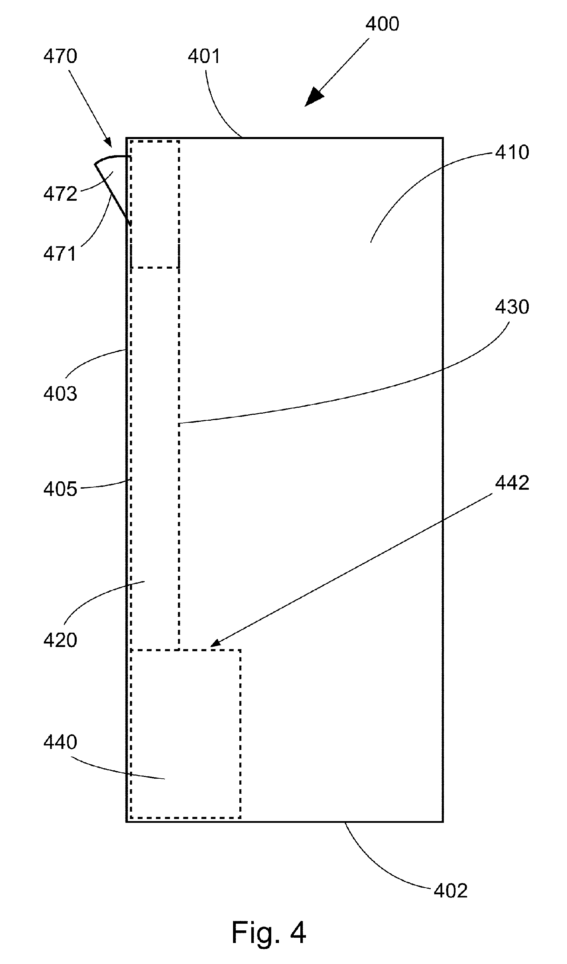

Fig. 4 shows a side view of a cardboard pack 400 with a top side wall 401 and a bottom 402 and in a sidewall 403 a pour opening 470. The pack 400 comprises a retractable tab 471 for closing off the pour opening 470.

A body 405 that includes a divider wall 430 is fitted into the interior of the pack 400. The pack 400 comprises a first chamber 410, a second chamber 420 and a transition chamber 440. Dry bulk material present in the first chamber 410 can reach the pour opening 470 via the transition chamber 440 by tilting the pack 400.

The back wall of the transition chamber 440 is formed by the bottom 402 of the pack.

By connecting to the divider wall 430 to the top side wall 401 the direct passage of the dry bulk material from the first chamber 410 to the second chamber 420 is prevented preferably completely.

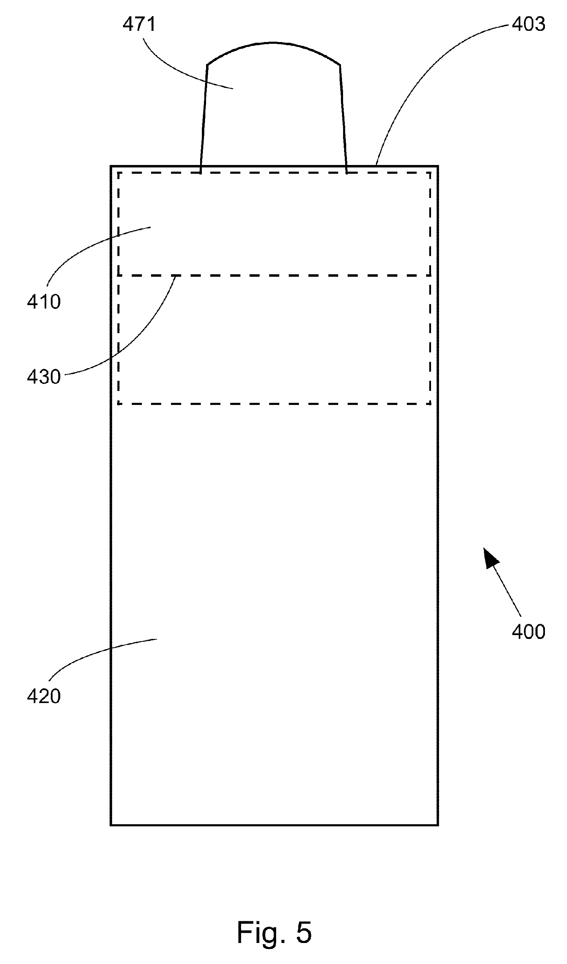

Fig. 5 shows a horizontal cross section of the cardboard pack 400 of Fig. 4. The inlet 442 can be seen via which bulk material from the first chamber 410 can end up in the transition chamber 440. When the pack is relatively full, there is no need to tilt the pack for this. When the pack is getting empty (to below the upper edge of the transition chamber 440), the pack 400 will be tilted in order to introduce bulk material in to the transition chamber 440. As a result the dry bulk material will end up on the divider wall 430, and upon tilting back will then slide into the transition chamber 440.

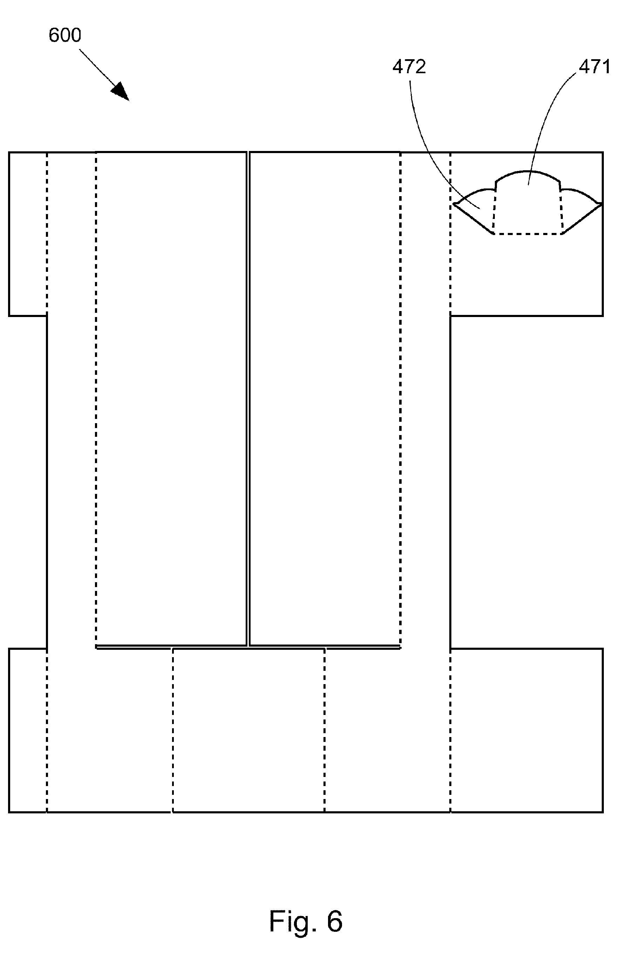

Fig. 6 shows a blank 600 for manufacturing a body 405 for a pack 400.

The blank 600 can also provide the tab 471 directly with side flaps 472. Folding lines are shown dashed. To form the body 405 from the blank 600 sections of the blank folded against each other will be connected by gluing to one another. However, the body 405 can also obtain or maintain its shape by placing it in a packaging, and be secured by clamping and/or glueing in the pack.

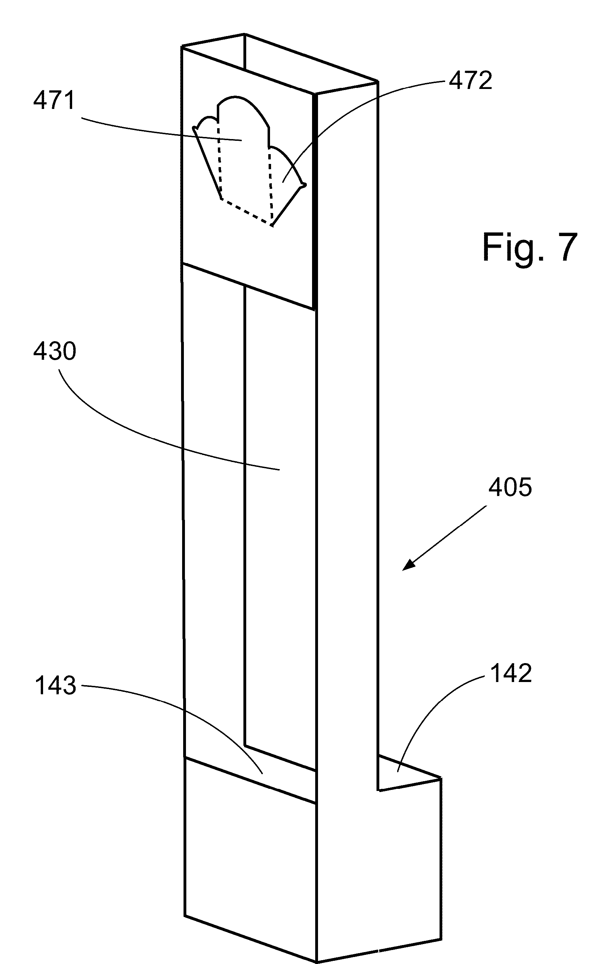

Fig. 7 shows a perspective view on the body 405, with the inlet 442 and the tab 471 with side flaps 472.

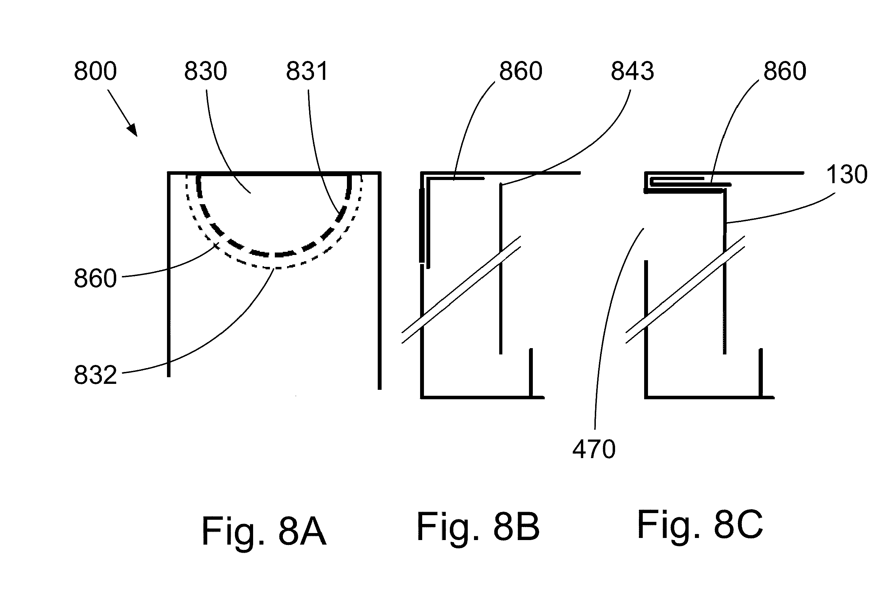

Fig. 8A to Fig. 8C show a front side of an alternative embodiment of a pack 800, a cross section of the pack 800 in a closed state and a cross section of the pack 800 in a usage state.

Fig. 8A shows the front side of a cardboard pack 800, more specifically the front sidewall 403, in which there is a perforation 831 which defines the cardboard part of a half-circular lip section 830. By pressing the lip section 830 inward the cardboard of the front sidewall 403 will tear, resulting in a lip section 830 with a free distal end 832. This distal end 832 presses the divider wall 430 inward until it ends up on the top side of the top edge 843 thereof (Fig. 8C), which blocks the the lip section 830 from moving back. The pour opening 470 is now free and the contents of the pack 800 can flow out hindered by the lip section 830. After pouring the divider wall 430 can be pushed inward with a finger again, freeing the distal end 832 of the lip section 830 becomes free and so moves back because of the resilient character of the cardboard. The moving back can be enhanced by using a resilient element 860, such as a plastic plate. When this resilient element 860 protrudes to beyond the circumference of the cardboard part of the lip section 830, the resilient element 860 also acts as an abutment as a result of which the pack 800 stays perfectly closed (corresponding to Fig. 8B). Such a packaging is for instance suitable for rice, cereals and the like.

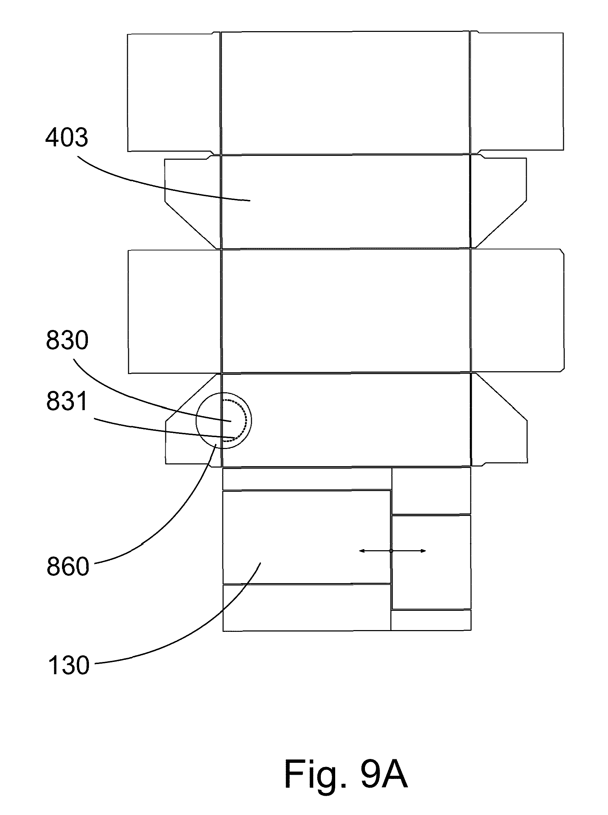

Fig. 9A shows a blank 900 for manufacturing a cardboard pack 800 provided with a resilient plastic element 860 in the form of a sticker.

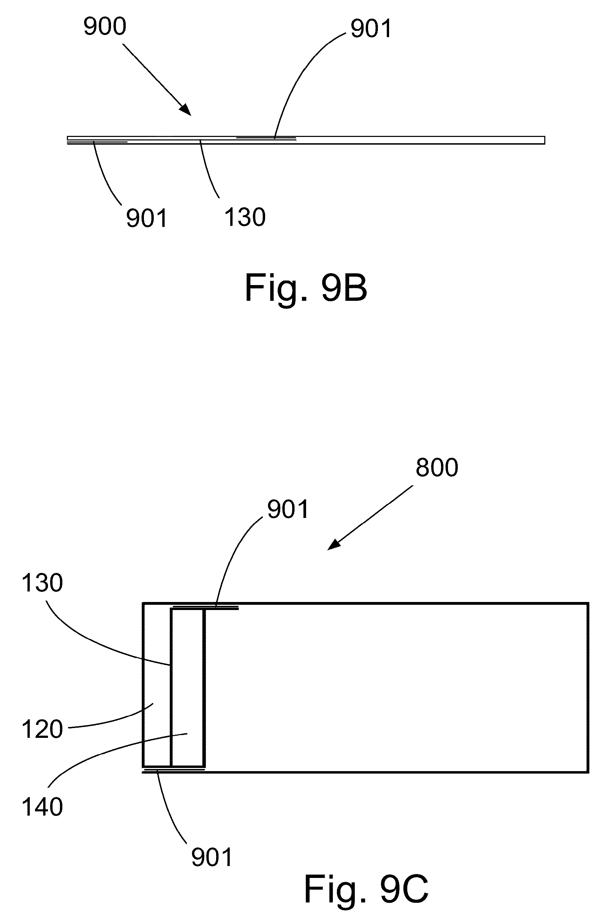

Fig. 9B shows a cross section of the pack 800 of Fig. 8A made of the blank 900 of Fig. 9A in a glued, folded state, wherein glue 901 is indicated.

Fig. 9C shows a horizontal cross section of the pack 800 manufactured with the glued blank of Fig. 9B in a folded out state.

## Claims

1. A container, which container comprises a pour opening,
**characterized in that** the container comprises a body, which body provides a divider wall between a first chamber and a second chamber which are linked by a transition chamber,
wherein the divider wall comprises a first side (131) and a second side (132), and the transition chamber
- at the first side (131) of the divider wall has an inlet for allowing a flowable material into the transition chamber from the first chamber, and
- at the second side (132) has a passage opening (143) for delivering the flowable material from the transition chamber to the second chamber, via which second chamber the flowable material can pass the pour opening of the container.

2. The container according to claim 1, wherein the container comprises a pour opening that can be closed off with a cap as the pour opening.

3. The container according to claim 2, wherein the body is part of a device (100) for the batch-wise delivery of a flowable material, which device (100) comprises a first end (101) and a second end (102), and wherein
- the device (100) at the first end (101) comprises a front wall (150) and at a distance of the second end (102) has a dispensing opening (151) for delivering the flowable material,
- the body defines at least the transition chamber (142) and the second chamber by means of walls wherein the second chamber opens up at the dispensing opening (151), and
- the divider wall (130) extends from the first end (101) towards the second end (102).

4. The container according to any of the claims 2 or 3, wherein the container is a pack having a roof shaped top side including two angled roof sections, wherein one of the two roof sections comprises the pour opening that can be closed off with a cap as the pour opening.

5. The container according to claim 1, wherein the container is a cardboard pack having a topside and an bottom side, with the body (405) for providing the portion-wise delivery of dry bulk material being located in the interior of the cardboard pack,
wherein
- a first section of the pack and the divider wall (430) define the first chamber (410),
- a second section of the pack and the divider wall (430) define the second chamber (420) wherein the second chamber (420) opens up into the pour opening (470), and
- a third section of the pack and the body define the transition chamber (440);
wherein the divider wall (430) extends in a direction being a direction from the topside toward the bottom side, and
wherein the container is a cardboard pack comprising a front wall, which container
- in an unopened state has a front wall with a lip section that at least partially forms part of the front wall and is defined by a U-shaped perforation, and
- can be brought in an opened state of the pack by tearing the perforation wherein the lip section is pushed in the pack; and
- with the lip section pushed into the pack may be in a locked state where the distal end of the lip section is capable of protruding to beyond the divider wall which defines a state wherein the opening is released and the lip section is kept in a locked position; and
- can be in an at least partially closed state after having been in the locked state by pressing against the divider wall so as to unlatch the lip section allowing it to return by resilience to a state wherein the lip section at least partially closes off the pour opening of the container.

6. A device (100) for delivering a flowable material, wherein the device (100) has a first end (101) and a second end (102), and comprises a body (105) that includes a divider wall (130) and defines a transition chamber (140), wherein
- the divider wall (130) has a first side (131) and a second side (132), and the transition chamber (140) at the first side (131) of the divider wall (130) has an inlet (142) for allowing a flowable material into the transition chamber (140) and at the second side (132) provides a passage opening (143) for delivering the flowable material from the transition chamber (140);
- the body (105) has a first chamber (110) having a lateral opening (111) for receiving the flowable material, which first chamber (110) is connected via the inlet opening (142) with the transition chamber (140);
- the device (100) at the first end (101) comprises a front wall (150) and at a distance from the second end (102) has a dispensing opening (151) for delivering the flowable material,;
- the body (105) defines by means of walls at least the transition chamber (140) and a second chamber (120) wherein the second chamber (120) opens up in the dispensing opening (151);
and
- the divider wall (130) extends from the first end (101) towards the second end (102).

7. The device (100) according to claim 6, wherein the front wall (150) of the device (100) is provided with the dispensing opening (151) for delivering the flowable material.

8. The device (100) according to any of the claims 6 or 7, wherein the body at the first end (101) between the front wall (150) and the back wall (141) is formed circularly over at least 180 and the remainder of the circumference fits within a circumference defined by that circular form.

9. The device (100) according to claim 8, wherein the body is within the circular circumference from the front wall (150) toward the backside.

10. The device (100) according to any of the claims 6 to 9, wherein
- the device (100) comprises a first device section (210) and a second device section (220),
- the first device section (210) comprises the front wall (150) and the divider wall,
- the second device section (220) comprises the transition chamber, and
- one of the first device section (210) and the second device section (220) has the form of a cap for the other device section.

11. The device (100) according to any of the claims 6 to 10, wherein at the first end (101) the body is provided with an abutment for contacting the container.

12. The device (100) according to any of the claims 6 to 11, wherein the body is provided with a collar (106) which extends over at least part of the circumference of the body and defines a gap for receiving an upright edge of a plastic pour opening that can be closed off with a cap.

13. A computer-readable medium, wherein the computer-readable medium is a computer-readable medium with executable instructions for a computer for manufacturing the device (100) according to any of the claims 6 to 12 using a 3D-printer.
